# EUROPÄISCHE PATENTSCHRIFT

(11) **EP 0 504 717 B1**
(45) Veröffentlichungstag und Bekanntmachung des Hinweises auf die Patenterteilung: **22.06.1994**
(21) Anmeldenummer: 92104125.7
(22) Anmeldetag: 11.03.1992
(51) Int. Cl.: F16F 9/08

(54) **Luftfeder mit einem elastomeren Luftfederbalg**
Air spring with an elastomeric air spring bellows
Ressort à l'air avec un soufflet élastomèrique de ressort à l'air

(30) Priorität: 16.03.1991 DE 4108711
(43) Veröffentlichungstag der Anmeldung: 23.09.1992
(73) Patentinhaber: Continental Aktiengesellschaft, 30165 Hannover (DE)
(72) Erfinder: Schneider, Eckhard, Dr., W-3160 Lehrte (DE); Clausen, Jens, W-3000 Hannover (DE)

(56) Entgegenhaltungen:
- EP-A- 0 257 779
- CH-A- 558 486
- GB-A- 2 221 280
- GB-A- 2 230 583
- US-A- 4 325 541

## Beschreibung

Die Erfindung betrifft eine Luftfeder mit einem elastomeren, unter Druck setzbaren Luftfederbalg und einem mit dem Balgvolumen koppelbaren Luftzusatzvolumen.

Aus der DE-AS 1 022 479 ist eine Luftfeder bekannt, deren Luftfederbalg über ein Zwischenrohr mit einer Kammer verbunden ist, die ein Luftzusatzvolumen enthält. Der untere Teil der Kammer ist mit Flüssigkeit gefüllt. Die Menge der Flüssigkeit kann über entsprechende Ventile und Rohrleitungen verringert oder vergrößert werden. Soll die Haupteigenfrequenz des Luftfederschwingungssystems erhöht werden, so wird das Gesamtluftvolumen durch Zuführung von Flüssigkeit in die Kammer verringert. Die Federcharakteristik wird steifer. Wird eine weichere Federcharakteristik erwünscht, so wird das gesamte Luftvolumen durch Ablassen der Flüssigkeit aus der Kammer vergrößert. Dadurch verringert sich die Haupteigenfrequenz des Luftfederschwingungssystems. Durch diese Anordnung kann beispielsweise bei einem mit einer Luftfederung ausgestatteten Kraftfahrzeug die Haupteigenfrequenz des Luftfederschwingungssystems während der Fahrt geändert werden.

Das Ändern der Steifigkeit einer Luftfeder ist zum Beispiel bei Fahrzeugen von Vorteil, um auf gerader Strecke eine komfortable Federung und in den Kurven ein wankstabiles Fahren möglich zu machen. Die bei Fahrzeugen mit hohem Schwerpunkt und weicher Federung auftretenden großen Wankwinkel bei Kurvenfahrten können so verringert werden.

Bei einem Einsatz einer derartigen Luftfeder in der Maschinenlagerung ist die Änderungsmöglichkeit der Eigenfrequenz vorteilhaft, da bei Anregung in einer Eigenfrequenz diese so verändert werden kann, daß die neue Eigenfrequenz außerhalb der Anregungsfrequenz liegt, und damit ein sicherer Betrieb der Maschine gewährleistet ist.

Als Nachteil der in der DE-AS 1 022 479 geschilderten Luftfeder wird angesehen, daß eine schnelle Änderung der Federsteifigkeit nicht zu erzielen ist. Darüber hinaus ist die notwendige hydraulische Ver- und Entsorgungsanlage technisch aufwendig und erfordert einen erheblichen Platzbedarf, der üblicherweise in Fahrzeugen oder Maschinenlagerungen nicht vorhanden ist. Außerdem ist die Erzielung einer hohen Federsteifigkeit begrenzt, da lediglich das Volumen der Zusatzkammer veränderbar ist .

Der Erfindung liegt die Aufgabe zugrunde, eine Luftfeder der eingangs geschilderten Art zu schaffen, die mit einem geringeren technischen Aufwand eine schnelle Änderung des wirksamen Luftvolumens und damit eine schnelle und wesentliche Änderung der Federsteifigkeit ermöglicht.

Die Aufgabe wird erfindungsgemäß durch die im Kennzeichen des Anspruchs 1 genannten Merkmale gelöst.

Die Luftfeder stellt ein System mit einem zweigeteilten Luftfedervolumen dar. Sind Luftfederbalgvolumen und Luftzusatzvolumen zusammengeschaltet, zeigt das Luftfedersystem eine niedrige Steifigkeit. Wird das Luftzusatzvolumen abgeschaltet, so wird umgehend eine hohe Steifigkeit der Feder realisiert. Die hohe Steifigkeit wird dadurch erreicht, daß der Luftfederbalg durch das eingefüllte, nicht mit der Luftfeder verbundene Medium ein geringeres, komprimierbares Luftvolumen aufweist, als es üblicherweise durch die Luftfederkonstruktion gegeben ist. Durch das volumenreduzierende Medium ist der Luftfederbalg mit einer steiferen Federcharakteristik ausgestattet, behält aber den notwendigen Federweg. Durch den begrenzten Füllungsgrad behält der Luftfederbalg den notwendigen Einfederungsweg. Da das eingefüllte Medium stets in der Luftfeder präsent ist, kann sich die Änderung der Federsteifigkeit unmittelbar und deutlich auswirken.

In vorteilhafter Ausgestaltung der Erfindung gemäß Anspruch 2 ist das Medium nahezu inkompressibel. Es eignen sich nahezu alle, mit dem elastomeren Werkstoff des Luftfederbalges verträglichen fluiden Medien.

In weiterer vorteilhafter Ausgestaltung der Erfindung ist das Medium Glyzerin. Glyzerin eignet sich für den Einsatz bei niedrigen Außentemperaturen.

In weiterer vorteilhafter Ausgestaltung der Erfindung besteht das fluide Medium aus organofunktionellem Silikonöl und Kieselsäure. Organofunktionelles Silikonöl ist biologisch abbaubar, während Kieselsäure ein schwer flüchtiger, inerter Stoff ist.

Eine vorteilhafte Verbindung des Luftzusatzvolumens mit dem Balgvolumen wird in den Merkmalen des Anspruchs 5 gekennzeichnet.

Ein schnelles Erzielen unterschiedlicher mehrerer Steifigkeitsstufen wird durch die im Anspruch 6 gekennzeichnete Ausbildung erreicht.

Wird das Innenvolumen des Abrollkolbens als Luftzusatzvolumen benutzt, benötigt die Luftfeder kein externes Luftzusatzvolumen, was zu einer platzsparenden Bauweise führt.

Für das Luftzusatzvolumen hohle Achsteile und/oder Aufbauteile zu benutzen, bedeutet große Volumina zur Verfügung zu stellen, die eine besonders niedrige Federsteifigkeit garantieren.

In Ausgestaltung der Erfindung ist der Luftfederbalginnenraum von einer beweglichen Membran unterteilt, die das eingefüllte Medium von dem Balgluftvolumen trennt. Ein Aufschäumen eines flüssigen oder ein Verwirbeln eines schüttfähigen Mediums wird dadurch verhindert.

Durch die Erfindung wird eine Luftfeder mit umschaltbarer Steifigkeit geschaffen, die ein umgehendes Wirksamwerden von auseinanderliegenden Steifigkeitsstufen erreicht.

Anhand der Zeichnung werden nachstehend zwei Ausführungsbeispiele der Erfindung näher erläutert. Es zeigt
- Fig. 1: eine Luftfeder mit einem Rollbalg, der zum Teil mit einer Flüssigkeit ausgefüllt ist,
- Fig. 2: den Rollbalg aus Fig. 1 im eingefederten Zustand,
- Fig. 3: einen Rollbalg mit eingebauter Membran zur Trennung von Luft und volumenreduzierender Flüssigkeit,
- Fig. 4: den Rollbalg aus Fig. 3 in eingefedertem Zustand.

Ein als Rollbalg 10 ausgebildeter Luftfederbalg ist an einer oberen Bördelplatte 11 befestigt. Das untere Ende des Rollbalges 10 ist von einem anvulkanisierten Spannteller 12 abgeschlossen. Über den Spannteller 12 ist der Rollbalg 10 mit dem Abrollkolben 18 befestigt.

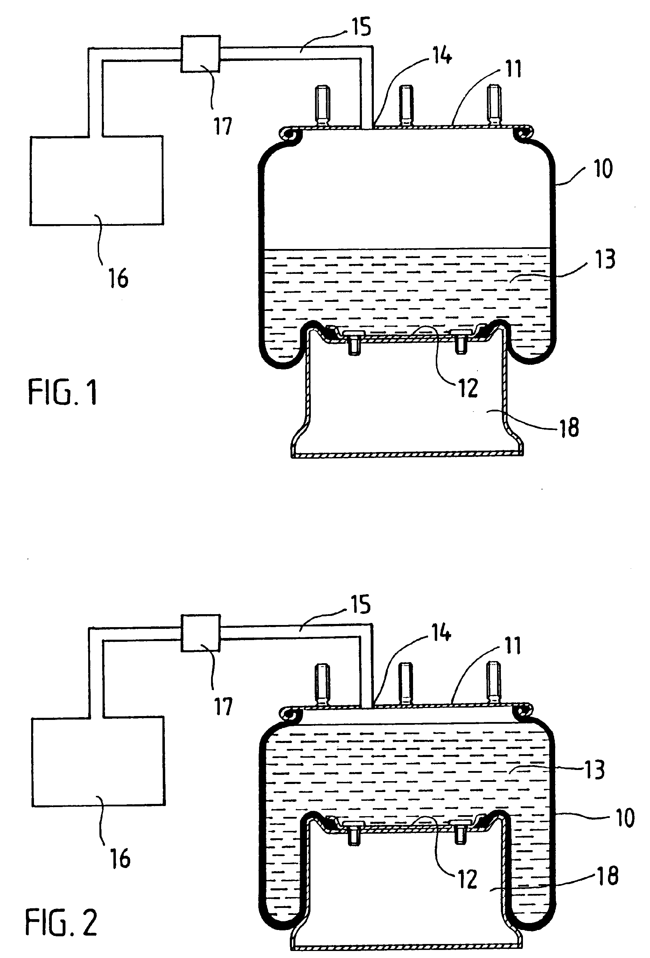

Der Rollbalg 10 ist in der Fig. 1 auf Betriebshöhe einfedert dargestellt. In dem Rollbalg 10 ist eine Flüssigkeit aus organofunktionellem Silikonöl und Kieselsäure eingefüllt. Die Flüssigkeit 13 ist im Inneren des Rollbalges 10 eingeschlossen und füllt diesen im auf Betriebshöhe eingefederten Zustand zum Teil aus.

Die Bördelplatte 11 ist mit einem Luftanschluß 14 versehen, von der eine Rohrleitung 15 zu einem Zusatzvolumen 16 verläuft. In der Rohrleitung 15 ist ein elektromagnetisch schaltbares Ventil 17 angeordnet, durch das die Rohrleitung 15 schlagartig abgesperrt werden kann.

In der Fig. 2 wird der Rollbalg 10 im vollständig eingefederten Zustand gezeigt. Dabei füllt das Volumen der Flüssigkeit 13 das verbleibende Balginnenvolumen nahezu vollständig aus.

Die Wirkungsweise der vorstehend beschriebenen Luftfeder ist wie folgt:

Wird der Rollbalg 10 bei einer Fahrzeugluftfeder verwandt, wird für eine weiche, komfortable und die Ladung schonende Federung das Zusatzvolumen 16 zugeschaltet. Das Luftzusatzvolumen 16 ist über die Rohrleitung 15 mit dem Balginnenvolumen verbunden, weil das Absperrventil 17 geöffnet ist. Rohrleitung 15 und Absperrventil 17 haben einen großen Durchflußquerschnitt, so daß das Luftzusatzvolumen voll zur Wirkung kommt.

Bei einer Kurvenfahrt wird das Zusatzvolumen 16 durch die Umschaltung des Ventils 17 schnell abgeschaltet. Es federt nur noch das Balginnenvolumen, das relativ klein ist und eine hohe Steifigkeit realisiert. Dadurch werden etwaige auftretende Wankwinkel reduziert.

Die schnelle Umschaltmöglichkeit zwischen zwei Federsteifigkeiten lassen je nach Situation eine harte oder eine weiche Federung einstellen. Die in der Praxis gewünschte umschaltbare Frequenz des Luftfederschwingungssystems von ca. 1 Hz auf ca. 2 Hz ist nun möglich.

Gleichzeitig ist bei der Verwendung von Rollbälgen aber auch ein ausreichender Hub möglich, der zum Heben von Ladeflächen benötigt wird.

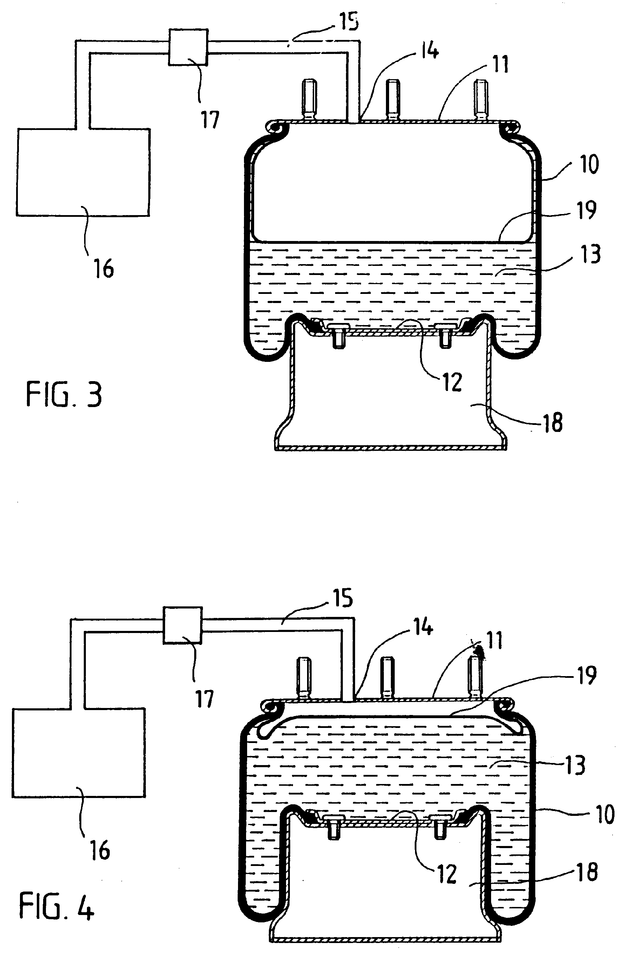

In der Ausbildung gemäß Fig. 3 weist der Rollbalg 10 in seinem Inneren eine bewegliche Membran 19 auf, die das luftvolumen von der eingefüllten Flüssigkeit trennt. Das Luftzusatzvolumen 16 ist nur mit dem Balgluftvolumen verbunden. Ein Aufschäumen oder Verdampfen der Flüssigkeit 13 ist durch diese Ausbildung verhindert.

## Patentansprüche

1. Luftfeder mit einem elastomeren, unter Druck setzbaren Luftfederbalg und einem mit dem Balgvolumen koppelbaren Luftzusatzvolumen,
**gekennzeichnet durch folgende Merkmale**
- das Luftzusatzvolumen (16) ist zum Balgvolumen zu- und abschaltbar,
- der Luftfederbalg (10) ist mit einem Medium (13) teilweise ausgefüllt,
- das Medium (13) ist weniger kompressibel als Luft,
- der inkompressible Volumenanteil des eingefüllten Mediums (13) entspricht höchstens dem Volumen, das der Luftfederbalg (10) im betriebsmäßig angelegten eingefederten Endzustand aufweist.

2. Luftfeder nach Anspruch 1, dadurch gekennzeichnet,
- das Medium (13) ist nahezu inkompressibel und fluid,
- der Füllungsgrad des Mediums (13) entspricht höchstens dem Volumen, das der Luftfederbalg (10) im betriebsmäßig angelegten eingefederten Endzustand aufweist.

3. Luftfeder nach Anspruch 2, dadurch gekennzeichnet, daß das fluide Medium Glyzerin ist.

4. Luftfeder nach Anspruch 2, dadurch gekennzeichnet, daß das fluide Medium aus organofunktionellem Silikonöl und Kieselsäure besteht.

5. Luftfeder nach einem der Ansprüche 1 bis 4, dadurch gekennzeichnet, daß das Luftzusatzvolumen (16) über eine Rohrleitung (15) mit dem Balgvolumen verbunden ist und daß in der Rohrleitung (15) ein elektromagnetisches Absperrventil (17) angeordnet ist.

6. Luftfeder nach einem der Ansprüche 1 bis 5, dadurch gekennzeichnet, daß mehrere mit dem Balgvolumen des Luftfederbalges (10) koppelbare Luftzusatzvolumina vorhanden sind, die einzeln oder mit einem oder mehreren anderen Luftzusatzvolumina mit dem Balgvolumen des Luftfederbalges (10) schaltbar sind.

7. Luftfeder nach einem der Ansprüche 1 bis 6, dadurch gekennzeichnet, daß das Luftzusatzvolumen aus dem Innenvolumen des Abrollkolbens (18) des Luftfederbalges (10) besteht.

8. Luftfeder nach einem der Ansprüche 1 bis 6, dadurch gekennzeichnet, daß das Luftzusatzvolumen aus einem hohlen Achsteil und/oder hohlen Aufbauteil eines Fahrzeuges besteht.

9. Luftfeder nach einem der Ansprüche 1 bis 8, dadurch gekennzeichnet, daß der Luftfederbalginnenraum von einer beweglichen Membran (19) unterteilt ist, die das eingefüllte Medium (13) von dem Balgluftvolumen trennt.

## Claims

1. Air spring, having an elastomeric, pressurisable air spring bellows and an additional air volume, which is connectable to the bellows volume, characterised by the following features:
- the additional air volume (16) is connectable to and disconnectable from the bellows volume,
- the air spring bellows (10) is partially filled with a medium (13),
- the medium (13) is less compressible than air,
- the incompressible volume content of the introduced medium (13) corresponds at most to the volume which the air spring bellows (10) has in the operationally established, compressed final state.

2. Air spring according to claim 1, characterised in that
- the medium (13) is almost incompressible and fluid,
- the degree of filling of the medium (13) corresponds at most to the volume which the air spring bellows (10) has in the operationally established, compressed final state.

3. Air spring according to claim 2, characterised in that the fluid medium is glycerin.

4. Air spring according to claim 2, characterised in that the fluid medium comprises organofunctional silicone oil and silica.

5. Air spring according to one of claims 1 to 4, characterised in that the additional air volume (16) is connected to the bellows volume via a pipe (15), and in that an electromagnetic shut-off valve (17) is disposed in the pipe (15).

6. Air spring according to one of claims 1 to 5, characterised in that a plurality of additional air volumes are provided, which are connectable to the bellows volume of the air spring bellows (10) and are connectable to the bellows volume of the air spring bellows (10) individually or with one or more other additional air volumes.

7. Air spring according to one of claims 1 to 6, characterised in that the additional air volume comprises the internal volume of the rolling piston (18) of the air spring bellows (10).

8. Air spring according to one of claims 1 to 6, characterised in that the additional air volume comprises a hollow axle part and/or hollow structural part of a vehicle.

9. Air spring according to one of claims 1 to 8, characterised in that the interior of the air spring bellows is divided by means of a displaceable diaphragm (19), which separates the introduced medium (13) from the air volume of the bellows.

## Revendications

1. Ressort pneumatique comprenant un soufflet en élastomère pouvant être mis sous pression, ainsi qu'un volume de complément d'air pouvant être raccordé au volume du soufflet,
caractérisé par les particularités suivantes
- le volume (16) du complément d'air peut être branché sur et débranché du volume du soufflet,
- le soufflet (10) du ressort pneumatique est rempli partiellement d'un milieu (13),
- le milieu (13) est moins compressible que l'air,
- la fraction du volume incompressible du milieu introduit (13) correspond au maximum au volume que comprend le soufflet (10) du ressort pneumatique à l'état final de compression atteint en service.

2. Ressort pneumatique selon la revendication 1, caractérisé en ce que
- le milieu (13) est presque incompressible et fluide,
- le degré de remplissage du milieu (13) correspond au maximum au volume que comprend le soufflet (10) du ressort pneumatique à l'état final de compression que celui-ci atteint en service.

3. Ressort pneumatique selon la revendication 2, caractérisé en ce que le milieu fluide est de la glycérine.

4. Ressort pneumatique selon la revendication 2, caractérisé en ce que le milieu fluide se compose d'huile au silicone organo-fonctionnelle et d'acide silicique.

5. Ressort pneumatique selon l'une des revendications 1 à 4, caractérisé en ce que le volume (16) de complément d'air est relié par un conduit (15) au volume du soufflet et en ce que une soupape électro-magnétique d'arrêt (17) est disposée dans le conduit (15).

6. Ressort pneumatique selon l'une des revendications 1 à 5, caractérisé en ce qu'il existe plusieurs volumes de complément d'air pouvant être raccordés au volume du soufflet (10) du ressort pneumatique et pouvant être branchés individuellement ou avec un ou plusieurs autres volumes de complément d'air sur le volume du soufflet (10) du ressort pneumatique.

7. Ressort pneumatique selon l'une des revendications 1 à 6, caractérisé en ce que le volume du complément d'air consiste en le volume intérieur du piston de rebroussement du soufflet (10) du ressort pneumatique.

8. Ressort pneumatique selon l'une des revendications 1 à 6, caractérisé en ce que le volume du complément d'air consiste en un élément creux d'essieu et/ou en une partie creuse de la carrosserie d'un véhicule.

9. Ressort pneumatique selon l'une des revendications 1 à 8, caractérisé en ce que une chambre intérieur du soufflet du ressort pneumatique est subdivisée par une membrane mobile (19) qui sépare le milieu introduit (13) du volume d'air du soufflet.
